# EUROPEAN PATENT APPLICATION

(11) **EP 1 793 217 A1**
(43) Date of publication of application: **06.06.2007**
(21) Application number: 06024804.4
(22) Date of filing: 30.11.2006
(51) Int. Cl.: G01M 11/02

(54) **Lens meter**

(30) Priority: 01.12.2005 JP 2005348535
(71) Applicant: NIDEK CO., LTD, Hiroishi-cho Gamagori-shi Aichi 448-0038 (JP)
(72) Inventor: Kajino, Tadashi, Gamagori-shi Aichi-ken, 443-0038 (JP)
(74) Representative: Hofer, Dorothea

(57) **Abstract**

A lens meter (1) for measuring optical characteristics of a lens (LE) to be examined, comprises: a measurement optical system (10) including a measurement optical axis (L), a light source (11), and a photo-receiving element (15); arithmetic means (40) which determines a deviation of an optical axis of the lens from the measurement optical axis based on a light receiving result of the photo-receiving element; a display (2); and control means (40) which displays a reticle mark (52, 72) whose center represents the measurement optical axis and a target mark (53a to 53c, 73) whose center represents the optical axis of the lens on the display so that both marks are in a positional relation according to the determined deviation, and which also displays a guide mark (55, 75) on the display within a predetermined distance from the center of the reticle mark.

## Description

### BACKGROUND OF THE INVENTION

### 1. Field of the Invention

The present invention relates to a lens meter for measuring optical characteristics of a lens to be examined.

### 2. Description of Related Art

A typical lens meter for measuring optical characteristics of a lens to be examined is arranged to display a target mark on a display, the target mark representing an alignment condition of an optical axis (an optical center) of the lens to be examined to a measurement optical axis.

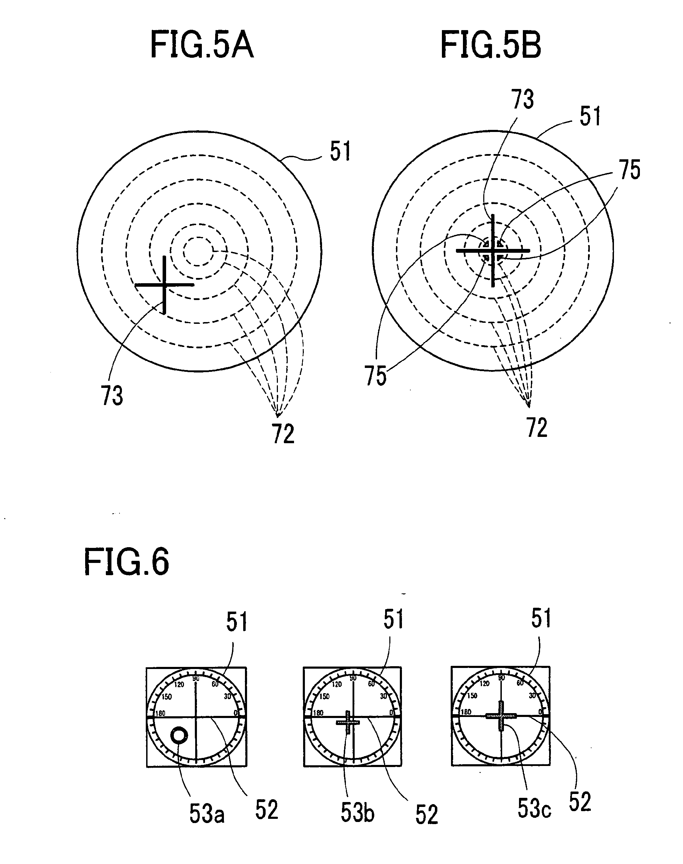

In a conventional lens meter, for instance, a cross-lined reticle mark 52 (whose center represents a measurement optical axis) is fixedly displayed within an alignment circle 51 on a display as shown in Fig. 6. Further, target marks 53a to 53c (each center of which represents an optical axis of a lens to be examined (hereinafter, a "lens optical axis")) representing an alignment condition of the lens optical axis to the measurement optical axis are selectively displayed to be movable according to a deviation (misalignment) of the lens optical axis from the measurement optical axis. The display form is changed among the target marks 53a to 53c according to the alignment condition. For instance, the ring-shaped target mark 53a is displayed when the deviation of the lens optical axis from the measurement optical axis exceeds 0.5Δ (prism diopter). The small cross-shaped target mark 53b is displayed when the deviation of the lens optical axis from the measurement optical axis is equal to or lower than 0.5Δ. When the lens optical axis further comes close to the measurement optical axis, e.g. into a centering allowable region with a radius of 0.4 mm from the measurement optical axis, the large cross-shaped target mark 53c is displayed.

When each of those cross-shaped target marks is superimposed on the cross-lined reticle mark, the positional relation of the center of the target mark relative to the center of the reticle mark would be hard to visually identify. This problem would be caused whenever the target mark is superimposed on the reticle mark irrespective of their forms.

### BRIEF SUMMARY OF THE INVENTION

The present invention has been made in view of the above circumstances and has an object to provide a lens meter allowing easy alignment of an optical axis (an optical center) of a lens to be examined with respect to a measurement optical axis.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

To achieve the purpose of the invention, there is provided a lens meter for measuring optical characteristics of a lens to be examined, comprising: a measurement optical system including a measurement optical axis, a light source, and a photo-receiving element; arithmetic means which determines a deviation of an optical axis of the lens from the measurement optical axis based on a light receiving result of the photo-receiving element; a display; and control means which displays a reticle mark whose center represents the measurement optical axis and a target mark whose center represents the optical axis of the lens on the display so that both marks are in a positional relation according to the determined deviation, and which also displays a guide mark on the display within a predetermined distance from the center of the reticle mark.

Further developments of the present invention are given in the dependent claims.

### BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,
Fig. 1 is a schematic external view of a lens meter in a preferred embodiment of the present invention;
Fig. 2 is a schematic structural view of an optical system and a control system of the lens meter;
Figs. 3A to 3E are diagrams showing display examples of a reticle mark, target marks, and guide marks;
Fig. 4 is an enlarged view of the reticle mark, target mark, and guide marks;
Figs. 5A and 5B are views showing modified examples of the reticle mark, target mark, and guide marks; and
Fig. 6 is a view showing changes of target marks with different display forms.

### DETAILED DESCRIPTION OF THE PREFERRED EMBODIMENTS

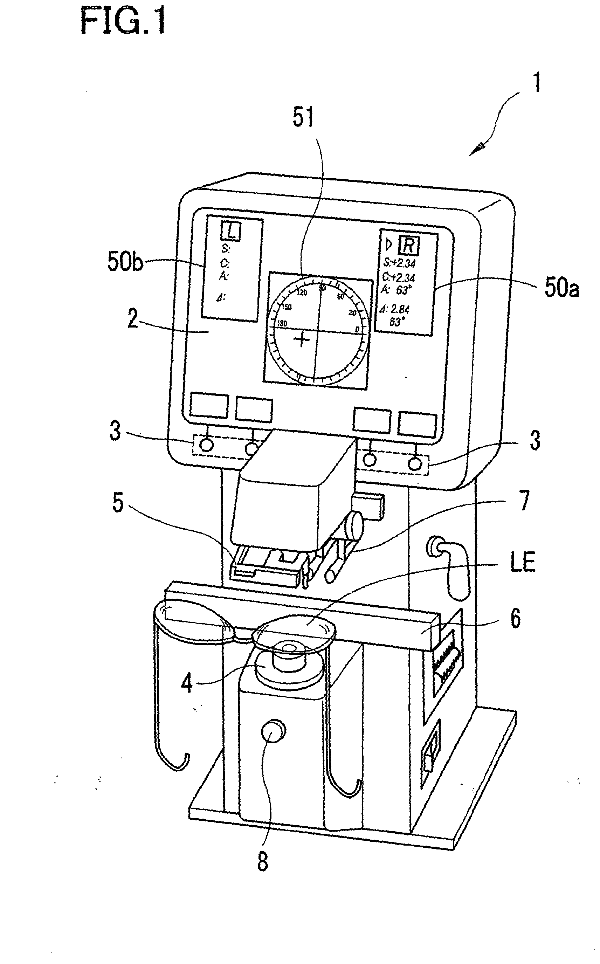

A detailed description of a preferred embodiment of the present invention will now be given referring to the accompanying drawings. Fig. 1 is a schematic external view of a lens meter 1 in the present embodiment of the invention. The lens meter 1 comprises a display 2 such as a liquid crystal display, a switch section 3, a nosepiece 4 serving as a lens table, a lens retainer 5, a lens pad 6, a centering mechanism 7, a read switch 8, and others.

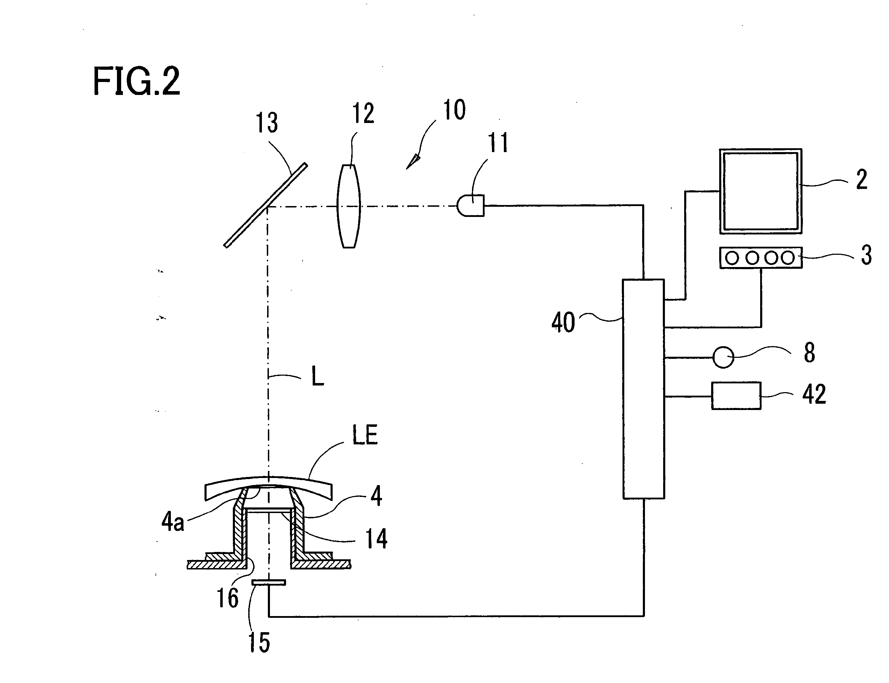

Fig. 2 is a schematic structural view of an optical system and a control system of the lens meter 1. A measurement optical system 10 of the lens meter 1 includes a light source 11, a collimator lens 12 (whose optical axis corresponds to a measurement optical axis L), a mirror 13, an index (target) plate 14, and a two-dimensional photo-receiving element (photodetector) 15. The index plate 14 and the photodetector 15 are placed so that respective centers are aligned with the measurement optical axis L. The index plate 14 is held by a holding member 16 fixed to a housing of the lens meter 1. The nosepiece 4 is fitted over the holding member 16. Accordingly, an opening 4a of the nosepiece 4 is positioned above the index plate 14 and the center of the opening 4a is aligned with the measurement optical axis L. The index plate 14 is formed with four pinholes (indexes, targets) arranged around the measurement optical axis L.

Light from the light source 11 is collimated by the lens 12. The collimated light is reflected by the mirror 13 and projected onto a lens LE to be examined mounted on the nosepiece 4. Of the light passing through the lens LE, only the light passing through the pinholes of the index plate 14 is received by the photodetector 15. An output signal of this photodetector 15 is inputted to an arithmetic control section 40, which determines optical characteristics of the lens LE such as sphere power (S), cylinder power (C), an astigmatic axial angle (A), and prism diopter (Δ) based on comparison between a light receiving result of the photodetector 15 when the lens LE is not mounted on the nosepiece 4 and a light receiving result of the photodetector 15 when the lens LE is mounted on the nosepiece 14 (the particulars are referred to US3,880,525 (JP-A-50(1975)-145249).

The measurement optical system of the lens meter is not limited to the above mentioned system and may be a well known system.

Operations of the lens meter will be explained below with a focus on alignment for the centering of a single focus lens.

In a measurement mode for the single focus lens, as shown in Fig. 1, various measurement information is displayed on the display 2. In the present embodiment, an alignment circle 51 is centrally displayed on the display 2. An optical characteristics section 50a for right-eye lens and an optical characteristics section 50b for left-eye lens are displayed on the right and left of the alignment circle 51 respectively.

When the lens LE, i.e. the single focus lens, is put on the nosepiece 4 (on the measurement optical axis L), the arithmetic control section 40 determines the S, C, A, and Δ of the lens LE. This calculation of the S, C, A, and Δ is continuously performed every time after a lapse of predetermined time. In the case where calculated values vary in association with movement of the lens LE on the nosepiece 4, the calculated values displayed on the section 50a or 50b are updated in real time.

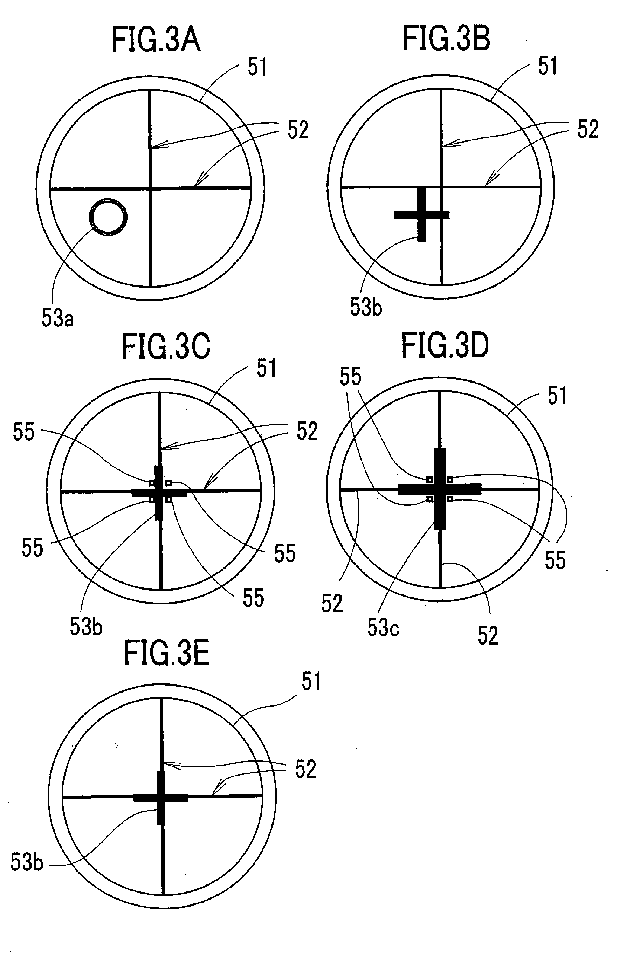

In the alignment circle 51, a cross-lined reticle mark 52 (whose center represents the measurement optical axis L) is fixedly displayed. Based on the obtained Δ, the arithmetic control section 40 obtains a deviation (a deviation direction and a deviation distance) of the optical axis (the optical center) of the lens LE (hereinafter, also referred to as a "lens optical axis") from the measurement optical axis L and causes one of the target marks 53a to 53c (each center of which represents the lens optical axis) to be moved and displayed to a position corresponding to the deviation from the center of the reticle mark 52 in the alignment circle 51. In other words, the reticle mark 52 and one of target marks 53a to 53c are displayed in a positional relation according to the obtained deviation. In the present embodiment, the ring-shaped target mark 53a (see Fig. 3A) is displayed when the deviation of the lens optical axis from the measurement optical axis L exceeds 0.5Δ. The small cross-shaped target mark 53b (see Fig. 3B) is displayed when the deviation of the lens optical axis from the measurement optical axis L is equal to or lower than 0.5Δ.

If the purpose is to determine measurement values of the lens LE from the S, C, and A of the lens LE calculated and displayed according to movement of the lens LE on the nosepiece 4, it is sufficient if only the target mark 53b is displayed. After the target mark 53b is displayed, when the switch 8 is pressed, the arithmetic control section 40 stores the calculated values of the S, C, and A of the lens LE at the time as the measurement values of the lens LE in a memory 42.

If the purpose is to perform the centering of the lens LE, the lens LE is further moved on the nosepiece 4 so that the target mark 53b comes close to the reticle mark 52, thereby bringing the lens optical axis close to the measurement optical axis L.

As the target mark 53b approaches the center of the reticle mark 52 in association with the movement of the lens LE to such an extent that the center of the target mark 53b is superimposed on the center of the reticle mark 52, the positional relation between the center of the target mark 53b and the center of the reticle mark 52 becomes hard to visually recognize. Even in such case, it is of course possible to recognize the positional relation in a lateral direction between the reticle mark 52 and the target mark 53b based on a vertical line of the reticle mark 52 and an upper or lower edge of a vertical bar of the target mark 53b and also to recognize the positional relation in a vertical direction between them based on a horizontal line of the reticle mark 52 and a left or right edge of a horizontal bar of the target mark 53b. However, it is not easy, particularly for a person having little experience, to obviously recognize the positional relation between their centers.

When the target mark 53b comes close to the center of the reticle mark 52, accordingly, the arithmetic control section 40 causes four guide marks 55 to be displayed around the center of the reticle mark 52 so that the adjacent guide marks are located on both sides of each of the vertical line and the horizontal line of the reticle mark 52 (see Fig. 3C). In the present embodiment, the guide marks 55 are displayed when the center of the target mark 53b approaches within a radius of 5 mm from the center of the reticle mark 52.

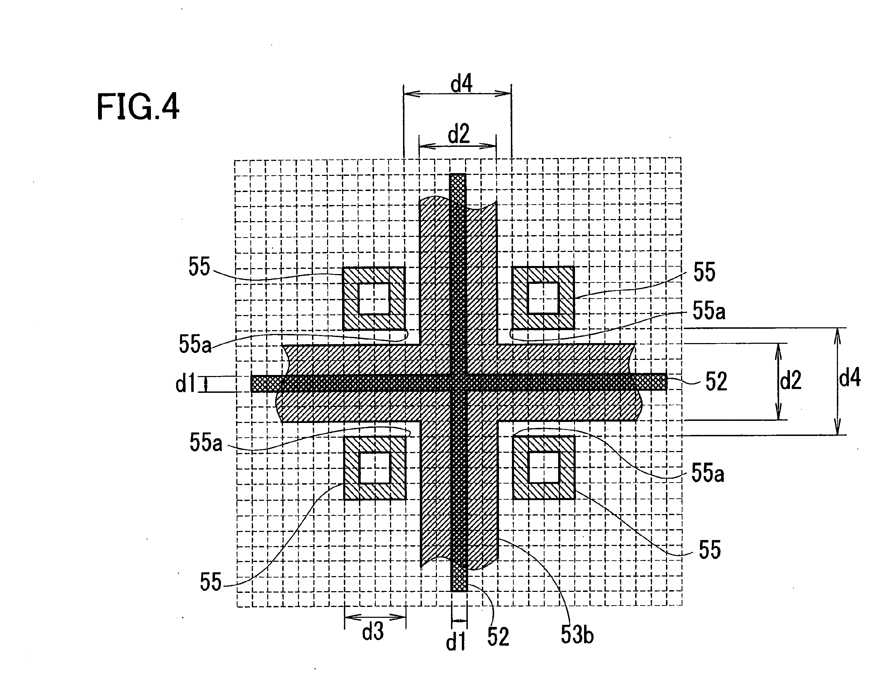

Fig. 4 is an enlarged view of the reticle mark 52, the target mark 53b, and the guide marks 55. The display 2 in the present embodiment has a resolution in which one pixel is of a square shape about 0.33 mm on a side. The reticle mark 52 in the present embodiment is of a cross shape that the vertical line and the horizontal line have a width d1 corresponding to one pixel. The target mark 53b in the present embodiment is of a cross shape that the vertical bar and the horizontal bar have a width d2 corresponding to five pixels. Each guide mark 55 in the present embodiment is of a hollow square shape that one side d3 corresponds to four pixels. The guide marks 55 are arranged so that their corners 55a closest to the center of the reticle mark 52 are located in positions of approx. 45°, approx. 135°, approx. 225°, and approx. 315° respectively with respect to the center of the reticle mark 52. The display position of each guide mark 55 should preferably be determined so that the corners 55a are not so far from the center of the reticle mark 52. For instance, it is preferable within a radius of 5 mm, more preferably 3 mm, from the center of the reticle mark 52 on the display 2. Since the guide marks 55 are displayed as above, the positional relation of the center of the target mark 53b to the center of the reticle mark 52 is easy to visually recognize.

An interval (distance) d4 between the adjacent guide marks 55 is slightly larger than the width d2 (corresponding to five pixels) of each of the vertical bar and the horizontal bar of the target mark 53b. The interval d4 in the present embodiment corresponds to seven pixels. In the present embodiment, specifically, when the target mark 53b appears just in an intermediate position between the adjacent guide marks 55, a clearance corresponding to one pixel is left between the target mark 53b and each guide mark 55. Accordingly, when the target mark 53b is deviated from the intermediate position between the adjacent guide marks 55, the target mark 53b will be superimposed on or touch the guide mark(s) 55, which makes the deviation of the target mark 53b easy to visually recognize.

In Fig. 3C, for example, it is possible to easily recognize that there are clearances only on the right of the vertical bar and on the upper side of the horizontal bar of the target mark 53b. Accordingly, it is easy to understand that the lens LE has only to be moved in a direction to bring the target mark 53b toward the clearance side, that is, in an upper right direction. A moving amount of the lens LE is also easy to recognize from the interval of the clearances. Thus, this case enables prompt alignment with high precision as compared with the case where the guide marks 55 are not displayed (see Fig. 3E).

In the present embodiment, each guide mark 55 is of a hollow square shape to facilitate visual recognition of the superimposed degree of the target mark 53. However, the guide mark 55 may be of a solid shape.

In the above description, the guide marks 55 are displayed when the center of the target mark 53b is positioned within a predetermined distance (a radius of 5 mm in the present embodiment) from the center of the reticle mark 52. Alternatively, the guide marks 55 may be displayed when the vertical bar of the target mark 53b touches the vertical line of the reticle mark 52 and/or when the horizontal bar of the target mark 53b touches the horizontal line of the reticle mark 52 or when the target mark 53a is changed to the target mark 53b or from the start of measurement.

Whether or not the guide marks 55 should be displayed may be selected with the switch section 3.

When the lens optical axis comes into the centering allowable region with a radius of 0.4 mm from the measurement optical axis L (i.e. when the deviation of the lens optical axis from the measurement optical axis comes to a tolerance allowing the centering) in association of the movement of the lens LE, the arithmetic control part 40 changes the small cross-shaped target mark 53b to the large cross-shaped target mark 53c (see Fig. 3D). By this change of a display form, it is easy to visually recognize that the lens optical axis has come into the centering allowable region.

The guide marks 55 may be made undisplayed as soon as the target mark 53c appears. However, the guide marks 55 should be preferably remain displayed for the reason that they visually give an examiner a sense of assurance or the like. The target mark 53c in the present embodiment is of a cross shape including the vertical bar and the horizontal bar each having the width corresponding to seven pixels. In the present embodiment, therefore, when the target mark 53b is changed to the target mark 53c, the guide marks 55 are moved in upward, downward, rightward, and leftward directions to separate from the reticle mark 52 by one pixel in each direction.

The aforementioned embodiment may be variously modified. For instance, the reticle mark displayed in the alignment circle 51 may be of any form (including size and color), in so far as it has a center representing the measurement optical axis L and allows the distance from the center to easily be recognized. For example, a reticle mark 72 including multiple circles as shown in Fig. 5A may be adopted. The target mark also may be of any form (including size), in so far as it has a center representing the lens optical axis and indicates an alignment condition of the lens optical axis with respect to the measurement optical axis L. For instance, as shown in Figs. 5A and 5B, it is also possible to adopt a cross-shaped target mark 73 of which size and/or color are changeable according to the deviation of the lens optical axis from the measurement optical axis L. The guide marks may be of any form (including size and the number), in so far as the corners closest to the reticle mark are located in at least three positions of approx. 45°, approx. 135°, approx. 225°, and approx. 315° with respect to the center of the reticle mark (so that the concerned corners surround the center of the reticle mark). For example, triangular guide marks 75 as shown in Fig. 5B may be adopted. The guide marks also may be three in number instead of four.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A lens meter (1) for measuring optical characteristics of a lens (LE) to be examined, comprising:
a measurement optical system (10) including a measurement optical axis (L), a light source (11), and a photo-receiving element (15);
arithmetic means (40) which determines a deviation of an optical axis of the lens from the measurement optical axis based on a light receiving result of the photo-receiving element;
a display (2); and
control means (40) which displays a reticle mark (52, 72) whose center represents the measurement optical axis and a target mark (53a to 53c, 73) whose center represents the optical axis of the lens on the display so that both marks are in a positional relation according to the determined deviation, and which also displays a guide mark (55, 75) on the display within a predetermined distance from the center of the reticle mark.

2. The lens meter according to claim 1, wherein the control means displays the guide mark within a radius of 5 mm from the center of the reticle mark.

3. The lens meter according to claim 1 or 2, wherein the target mark displayed on the display is of a cross shape including a vertical bar and a horizontal bar and the guide mark includes three or more marks arranged around the center of the reticle mark at an interval larger than each width of the vertical bar and the horizontal bar.

4. The lens meter according to any one of claims 1 to 3, wherein the reticle mark is of a cross shape including a vertical line and a horizontal line and the target mark is of a cross shape including a vertical bar and a horizontal bar which are larger in thickness than the vertical line and the horizontal line, and the guide marks are displayed on both sides of each of the vertical line and the horizontal line at an interval larger than each width of the vertical bar and the horizontal bar.

5. The lens meter according to any one of claims 1 to 4, wherein the control means displays three or more guide marks so that their corners are located in at least three positions of approx. 45°, approx. 135°, approx. 225°, and approx. 315° with respect to the center of the reticle mark.

6. The lens meter according to any one of claims 1 to 5, wherein the control means displays the guide marks so that the corners are located within a radius of 5 mm from the center of the reticle mark.

7. The lens meter according to any one of claims 1 to 6, wherein the control means displays the guide marks when the center of the target mark is located within a predetermined distance from the center of the reticle mark.

8. The lens meter according to any one of claims 1 to 7 further comprising selection means with witch whether or not the guide mark should be displayed is selected.
